(19) Europäisches Patentamt
European Patent Office
Office européen des brevets

(11) **EP 3 076 199 B1**

(12) **EUROPÄISCHE PATENTSCHRIFT**

(45) Veröffentlichungstag und Bekanntmachung des Hinweises auf die Patenterteilung:
**17.01.2018 Patentblatt 2018/03**

(51) Int Cl.:
**G01S 7/40** (2006.01)    **G01S 13/44** (2006.01)
**G01S 13/78** (2006.01)

(21) Anmeldenummer: **15000973.6**

(22) Anmeldetag: **04.04.2015**

(54) **VERFAHREN ZUM KALIBRIEREN EINES RADARSYSTEMS**

METHOD FOR CALIBRATING A RADAR SYSTEM

PROCÉDÉ D'ÉTALONNAGE D'UN SYSTÈME RADAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.10.2016 Patentblatt 2016/40**

(73) Patentinhaber: **HENSOLDT Sensors GmbH**
**82024 Taufkirchen (DE)**

(72) Erfinder: **Wendlandt, Sinja**
**82110 Germering (DE)**

(74) Vertreter: **LifeTech IP**
**Spies & Behrndt Patentanwälte PartG mbB**
**Elsenheimerstraße 47a**
**80687 München (DE)**

(56) Entgegenhaltungen:
GB-A- 1 365 247    US-A- 3 353 180
US-A- 3 883 870    US-A- 5 619 206

• Samuel M. Sherman: "Monopulse Principles and Techniques;" In: "Monopulse Principles and Techniques;", 1. Dezember 1984 (1984-12-01), Artech House;, 610 Washington St.; Dedham, MA02026; USA;, XP055217189, ISBN: 978-0-89-006137-4 Seiten 48-53, * Absätze [03.2] - [03.3] *

EP 3 076 199 B1

**Beschreibung**

Gebiet der Erfindung

Die Erfindung betrifft das technische Gebiet der Radartechnik, insbesondere ein Verfahren zum Kalibrieren eines Radarsystems sowie ein Radarsystem, welches ausgeführt ist, das Verfahren zum Kalibrieren des Radarsystems durchzuführen.

Technischer Hintergrund

In Sekundärradar-Systemen kann der Azimut eines erfassten Ziels beispielsweise mit dem sogenannten Phasenmonopuls-Verfahren bestimmt werden. Dieses Verfahren erfordert einen Abgleich des Phasenversatzes zwischen Summen- und Differenz-Kanal der Monopuls-Antenne. Die GB 1,365,247 A beschreibt ein Beispiel für ein Monopuls-Radar-System.

Eine Monopuls-Antenne ist üblicherweise als Antennengruppe aufgebaut, welche eine Vielzahl von Einzelantennen aufweist. Aus der Vielzahl von Einzelantennen können Gruppen von Einzelantennen summenbildend oder differenzbildend zusammengeschaltet werden.

Phasenmonopuls und Amplitudenmonopuls sind Verfahren, welche zur Bestimmung des Azimuts eines erfassten Ziels eingesetzt werden. Bei diesen Verfahren erfolgt üblicherweise ein Phasenabgleich zwischen einem Summen- und einem Differenzkanal als Kalibrierungsschritt vor dem Phasen- oder Amplitudenmonopulsverfahren, um zuverlässige Ergebnisse bei der Bestimmung des Azimuts zu erhalten. Dieser Phasenabgleich erfolgt beispielsweise, indem die Einstellung eines Phasenschiebers zur Anpassung des Phasenversatzes zwischen Summen- und Differenzkanal manuell angepasst wird und gleichzeitig das Azimut-Ergebnis für ein bekanntes Testziel betrachtet wird (z.B. Far-Field-Monitor); dabei wird die Einstellung des Phasenschiebers beibehalten, welche für das bekannte Testziel das beste Ergebnis liefert. Alternativ kann der Phasenversatz durch Einspeisen eines bekannten Signals in den Summen- und Differenzkanal vermessen und der Phasenschieber entsprechend eingestellt werden.

Zusammenfassung der Erfindung

Es kann als Aufgabe der Erfindung betrachtet werden, einen Kalibriervorgang eines Radarsystems zu vereinfachen.

Diese Aufgabe wird gelöst durch den Gegenstand der unabhängigen Ansprüche. Weiterbildungen ergeben sich aus den abhängigen Ansprüchen und aus der folgenden Beschreibung.

Gemäß einem ersten Aspekt ist ein Verfahren zum Kalibrieren eines Radarsystems, welches eine Empfangseinheit mit einer Mehrzahl von Antennenelementen aufweist, angegeben, wobei das Verfahren die folgenden Schritte aufweist: Empfangen eines ersten komplexen Signals auf einem ersten Kanal und Umsetzen des empfangenen ersten komplexen Signals in ein erstes komplexes Informationsübertragungssignal; Empfangen eines zweiten komplexen Signals auf einem zweiten Kanal und Umsetzen des empfangenen zweiten komplexen Signals in ein zweites komplexes Informationsübertragungssignal; Ermitteln eines komplexen Amplitudenmonopulssignals als Verhältnis des ersten komplexen Informationsübertragungssignals und des zweiten komplexen Informationsübertragungssignals; Ermitteln eines Phasenversatzes zwischen dem ersten komplexen Informationsübertragungssignal und dem zweiten komplexen Informationsübertragungssignal basierend auf einem Realteil und einem Imaginärteil des Verhältnisses des ersten komplexen Informationsübertragungssignals und des zweiten komplexen Informationsübertragungssignals; Nutzen des ermittelten Phasenversatzes, um eine relative Phasenverschiebung zwischen dem ersten komplexen Informationsübertragungssignal des ersten Kanals und dem zweiten komplexen Informationsübertragungssignal des zweiten Kanals auszugleichen.

Der erste Kanal und der zweite Kanal sind Summen- oder Differenzsignale jeweils einer Gruppe von Antennenelementen. Ein Antennenelement kann beispielsweise ein Empfangselement einer Empfangseinheit sein, wobei die Empfangseinheit aus dem Signal jeweils einer Gruppe von Antennenelementen ein Summen- bzw. ein Differenzsignal bildet. Die Empfangseinheit kann beispielsweise ein HF-Netzwerk eines Sekundärradarsystems sein.

Das erste komplexe Signal entspricht dem auf dem ersten Kanal, beispielsweise dem Summenkanal, empfangenen Signal. Dieses erste komplexe Signal wird für die weitere Verarbeitung durch das Radarsystem in ein komplexes Informationsübertragungssignal umgewandelt, damit die darin enthaltene Information von elektrischen oder elektronischen Bauteilen übertragen und/oder verarbeitet werden kann. In anderen Worten kann das erste komplexe Informationsübertragungssignal ein optisches oder ein elektrisches Signal sein, welches in dem Radarsystem Daten von der Empfangseinheit (=Antennengruppe) zu einer Verarbeitungseinheit überträgt.

Diese Aussagen betreffend das erste komplexe Signal gelten sinngemäß gleich für das zweite komplexe Signal, welches insbesondere ein Differenzsignal sein kann.

Die Phasenverschiebung zwischen dem ersten Kanal und dem zweiten Kanal bzw. zwischen den über diese Kanäle übertragenen Informationsübertragungssignalen resultiert üblicherweise aus Eigenschaften von Bauteilen und Übertragungsmedien, die diese beiden Kanäle darstellen. Ein solcher Phasenversatz, welcher auch als parasitärer Phasenversatz bezeichnet werden kann, führt üblicherweise dazu, dass die Azimutbestimmung mit dem Phasenmonopulsverfahren durch ein Sekundärradarsystem nicht genau durchgeführt werden kann. Bei dem Amplitudenmonopulsverfahren verhindert der parasitäre Phasenversatz die Auswertung des Imaginärteils zur Detektion von beispielsweise Mehrwegeausbreitung oder anderen Signalverfälschungen und -störungen.

Das hierin beschriebene Verfahren erlaubt eine automatisierte Ermittlung der Phasenverschiebung zwischen zwei Kanälen, z.B. zwischen dem Summenkanal und dem Differenzkanal, eines Sekundärradarsystems und kann als auf folgenden Erkenntnissen basierend beschrieben werden:

Der Betrag des in diesem Verfahren ermittelten Amplitudenmonopulssignals als Verhältnis der Signale des ersten und zweiten Kanals wird als gleichbleibend betrachtet. Im Idealfall, das heißt, wenn zwischen dem ersten Kanal und dem zweiten Kanal kein Phasenversatz vorliegt, ist der Imaginärteil gleich null, d.h. der Imaginärteil hat keinen Einfluss auf den Betrag des Amplitudenmonopulssignals, so dass damit der Betrag dem Realteil gleichgesetzt werden kann.

Das Verfahren kann in anderen Worten die Schritte aufweisen: Ein ideales Amplitudenmonopulssignal, d.h. ohne parasitäre Phasenverschiebung, wird als Zielgröße oder Referenz für die Kalibrierung verwendet. Anschließend wird ein komplexes Amplitudenmonopulssignal mit Realteil und Imaginärteil gemessen. Da sich der Betrag des Amplitudenmonopulssignals nicht verändert (also unabhängig vom Realteil und Imaginärteil gleichbleibend ist, siehe Annahme oben), kann ausgehend von dem bekannten Betrag des Amplitudenmonopulssignals und dem gemessenen Real- und Imaginärteil die Phasenverschiebung zwischen dem ersten Kanal und dem zweiten Kanal ermittelt werden, weil der Realteil nicht mehr dem Betrag entspricht und der Imaginärteil ungleich null ist.

In einem Anwendungsbeispiel des Verfahrens kann ein Nutzsignal eines Far Field Monitors (FFM, Transponder mit bekannter, fester Position) oder die Sekundärradarsignatur realer Ziele an einer zwei-kanaligen Empfangseinheit eingespeist werden (in diesem Fall ist ein CW-Testsignal o.ä. nicht zwingend erforderlich). Im Empfänger werden Real- und Imaginärteil des Amplitudenmonopulssignals bestimmt und ausgewertet. Im bereits oben genannten Idealfall (Phasenversatz zwischen Summe- und Differenzkanal 0°) ist der Imaginärteil null, während der Realteil (und der Betrag, in diesem Fall identisch mit dem Realteil) ungleich null ist und den Winkel als Abweichung von der Blickrichtung der Hauptkeule der Antenne repräsentiert, unter dem das Signal empfangen worden ist. Das Amplitudenmonopulssignal bezieht sich üblicherweise auf die sog. Beammitte, wo der Summenkanal ein Maximum und der Differenzkanal einen Einschnitt hat, und gibt an, wie weit links oder rechts von der Beammitte ein Objekt ist. Den absoluten Winkel des Objektortes ermittelt ein Antennengeber, welcher die absolute Ausrichtung der Antenne kennt. Ist der Phasenversatz zwischen erstem und zweitem Kanal ungleich 0°, sind Real- und Imaginärteil ungleich null. Der Betrag gibt den Winkel an, unter dem das Signal empfangen wurde. Aus dem Unterschied zwischen Realteil und Betrag wird der Phasenversatz berechnet und der Phasenschieber entsprechend eingestellt.

Dadurch ist ein automatischer Abgleich des Phasenversatzes möglich, der Abgleich geht schneller vonstatten und erfordert weniger Aufwand, da insbesondere kein Testsignal an der Antenne eingespeist werden muss. Weiterhin ist das Abgleichergebnis genauer, da ein genauer Indikator (Imaginärteil = 0) verwendet werden kann.

Das hierin beschriebene Verfahren sieht vor, den Phasenversatz zwischen zwei Kanälen eines Sekundärradarsystems zu berechnen und zu kompensieren, indem der Real- und Imaginärteil des komplexen Amplitudenmonopulssignals eines oder mehrerer bekannter oder auch beliebiger Zeile ausgewertet wird.

Gemäß einer Ausführungsform der Erfindung wird das erste komplexe Signal als Summensignal zumindest zweier Antennenelemente einer Empfangseinheit des Radarsystems gebildet.

Gemäß einer weiteren Ausführungsform der Erfindung wird das zweite komplexe Signal als Differenzsignal zumindest zweier Antennenelemente einer Empfangseinheit des Radarsystems gebildet.

Gemäß einer weiteren Ausführungsform der Erfindung weist das Verfahren weiterhin den Schritt auf: Zuführen des ermittelten Phasenversatzes an eine Phasenschiebereinheit, welche angeordnet bzw. ausgeführt ist, den ermittelten Phasenversatz dem ersten komplexen Informationsübertragungssignal zuzuführen.

Der ermittelte Phasenversatz wird insbesondere so zugeführt, dass der parasitäre relative Phasenversatz zwischen den beiden Kanälen ausgeglichen wird. Dazu kann der Phasenversatz entweder additiv auf einen der Kanäle oder subtraktiv auf den anderen der Kanäle appliziert werden, um die Phasenlage der über die Kanäle übertragenen Signale aneinander anzugleichen. Beispielsweise kann der Ausgleich des Phasenversatzes entweder auf dem Summenkanal oder alternativ auf dem Differenzkanal erfolgen, mit dem einzigen Unterschied des Vorzeichens des applizierten Phasenversatzes.

Gemäß einer weiteren Ausführungsform der Erfindung weist das Verfahren weiterhin den Schritt auf: Einspeisen eines bekannten Signalmusters in die Empfangseinheit, wobei dieses bekannte Signalmuster als erstes komplexes Signal bzw. als zweites komplexes Signal genutzt wird.

Bei dem Signalmuster kann es sich beispielsweise um ein bekanntes Signalmuster mit einer Trägerfrequenz von 1090 MHz handeln, welche üblicherweise in Sekundärradarsystemen genutzt wird. Weiterhin kann das Signalmuster syntaktisch (Codierung, Signalpegel, usw.) so ausgestaltet sein, dass es von einem Sekundärradarsystem empfangen und verarbeitet werden kann.

Gemäß einer weiteren Ausführungsform der Erfindung wird der Phasenversatz zwischen dem ersten komplexen Informationsübertragungssignal und dem zweiten komplexen Informationsübertragungssignal zwischen der Empfangseinheit und einer Signalverarbeitungseinheit des Radarsystems ermittelt, wobei die Signalverarbeitungseinheit ausgeführt ist, eine Umfeldabbildung basierend auf dem ersten komplexen Informationsübertragungssignal und dem zweiten komplexen Informationsübertragungssignal zu erzeugen.

Damit kann gewährleistet werden, dass derjenige parasitäre Phasenversatz ermittelt wird, welcher den Informationsübertragungssignalen auf der Übertragungsstrecke zwischen der Empfangseinheit und der Signalverarbeitungseinheit appliziert wird. Bei der Signalverarbeitungseinheit handelt es sich um eine Recheneinheit eines Radarsystems, welche basierend auf den empfangenen Signalen eine Umfeldbestimmung vornimmt, d.h. insbesondere eine Azimutbestimmung der erfassten Ziele.

Gemäß einer weiteren Ausführungsform der Erfindung wird der Phasenversatz zwischen dem ersten komplexen Informationsübertragungssignal und dem zweiten komplexen Informationsübertragungssignal unmittelbar an einer Eingangsschnittstelle der Signalverarbeitungseinheit ermittelt.

Damit kann gewährleistet werden, dass der Beitrag der gesamten Übertragungsstrecke zwischen Empfangseinheit und Signalverarbeitungseinheit auf den Phasenversatz berücksichtigt wird, so dass der Phasenversatz insgesamt genauer ermittelt wird.

Gemäß einer weiteren Ausführungsform der Erfindung wird der Phasenversatz durch die Signalverarbeitungseinheit ermittelt.

D.h. dass die Signalverarbeitungseinheit ein Funktionsmodul aufweist, welches die Schritte des Verfahrens wie hierin beschrieben ausführt oder ausführen kann. Das Funktionsmodul kann auch durch eine Mehrzahl von Rechenanweisungen ersetzt werden, welche durch einen Prozessor der Signalverarbeitungseinheit ausgeführt werden.

Gemäß einem weiteren Aspekt der Erfindung ist ein Radarsystem angegeben, welches vorgesehen ist, das Verfahren wie oben beschrieben auszuführen.

Die obigen Ausführungen betreffend das Verfahren gelten in sinngemäß gleicher Weise für das Radarsystem und werden an dieser Stelle nicht wiederholt. Es wird Bezug genommen auf die Ausführungen betreffend das Verfahren.

Das oben beschriebene Verfahren kann genutzt werden, ein Radarsystem zu kalibrieren, bevor dieses in Betrieb genommen wird. Diese Kalibrierung kann insbesondere notwendig sein, da sich selbst bei identisch aufgebauten Radarsystemen eine unterschiedliche Phasenverschiebung zwischen zwei Kanälen ergeben kann, z.B. auf Grund von Bauteiltoleranzen oder Unterschieden in den verwendeten Materialien für die Übertragungsstrecke von der Empfangseinheit zu der Signalverarbeitungseinheit.

Die Kalibrierung kann dabei nach der Installation des Radarsystems einmalig, vor jeder Inbetriebnahme, oder in regelmäßigen zeitlichen Intervallen vorgenommen werden.

Bei dem Radarsystem handelt es sich in einer Ausführungsform um ein Sekundärradarsystem. Das Radarsystem kann ausgeführt sein, ein Phasenmonopulsverfahren oder ein Amplitudenmonopulsverfahren auszuführen.

Kurze Beschreibung der Figuren

Weitere Details werden mit Bezug zu den Figuren beschrieben, in welchen:

Fig. 1 ein Radarsystem gemäß einem Ausführungsbeispiel der Erfindung zeigt;

Fig. 2 eine Darstellung der komplexen Signale in einem Radarsystem gemäß einem weiteren Ausführungsbeispiel der Erfindung zeigt;

Fig. 3 eine Darstellung der komplexen Signale in einem Radarsystem gemäß einem weiteren Ausführungsbeispiel der Erfindung zeigt.

Detaillierte Beschreibung von Ausführungsbeispielen

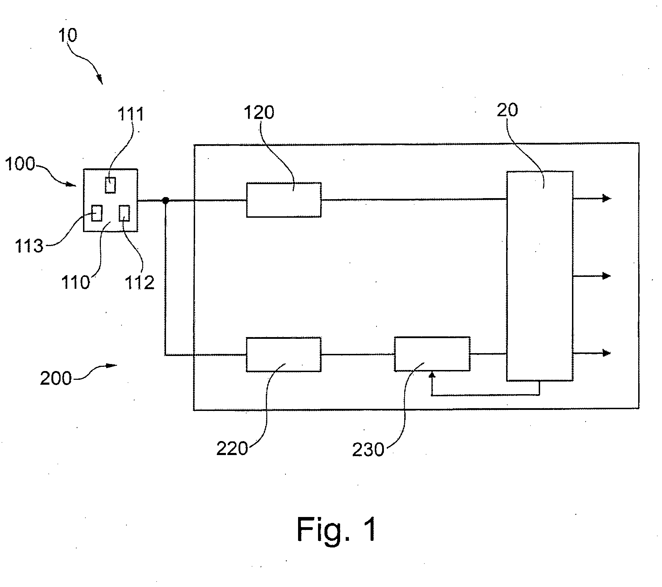

Fig. 1 zeigt ein Radarsystem 10 mit einer Empfangseinheit 110, welche über den ersten Kanal 100 und den zweiten Kanal 200 komplexe Signale über eine Übertragungsstrecke sowie Übertragungselemente 120 bzw. 220 zu der Signalverarbeitungseinheit 20 überträgt. Die Signalverarbeitungseinheit 20 ermittelt ein Amplitudenmonopulssignal und übermittelt dieses an eine Darstellungseinheit (nicht gezeigt) zur Darstellung der empfangenen Radarsignale.

Die Empfangseinheit 110 ist eine Antennengruppe aufweisend eine Mehrzahl von Antennenelementen 111, 112, 113, welche wahlweise in Gruppen von mindestens zwei Antennenelementen eingeteilt werden können, so dass jede Gruppe entweder ein Summensignal oder ein Differenzsignal an den ersten Kanal 100 bzw. den zweiten Kanal 200 liefert.

In dem zweiten Kanal 200 ist ein Phasenschieberelement 230 angeordnet. Der Vollständigkeit halber sei darauf hingewiesen, dass das Phasenschieberelement 230 auch in dem ersten Kanal 100 angeordnet sein kann. Das Phasenschieberelement 230 ist ausgeführt, einen Phasenversatz zwischen den Signalen des ersten Kanals 100 und des zweiten Kanals 200 auszugleichen. Das Phasenschieberelement 230 ist mit der Signalverarbeitungseinheit 20 gekoppelt, damit die Signalverarbeitungseinheit den ermittelten Phasenversatz zwischen dem ersten und zweiten Kanal an das Phasenschieberelement übermitteln kann, so dass die Phasenanpassung entsprechend erfolgen kann.

Das Radarsystem kann beispielsweise eine zwei-kanalige Monopulsantenne und einen linearen Empfänger mit komplexer Signalverarbeitung (I/Q) in beiden Kanälen aufweisen und für die Azimutbestimmung mit Amplituden- und/oder Phasenmonopulsverfahren ausgeführt sein.

Bei der Azimutbestimmung wird der Azimut eines erfassten Ziels als Abweichung von der Blickrichtung der Hauptkeule der Antenne bestimmt (Off-Boresight Azimuth).

Beim Phasen-Monopulsverfahren wird die Phasendifferenz zwischen dem an der Summen- und dem an der Differenzantenne empfangenen Signal bestimmt. Bei bekannter Antennencharakteristik kann aus der Phasendifferenz direkt der Off-Boresight Azimuth ermittelt werden. Um genaue Ergebnisse zu erzielen, kann es notwendig sein, dass die Empfangspfade beider Kanäle zwischen Antenne und Empfänger so abgeglichen sind, dass die Phasendifferenz zwischen beiden Kanälen 0° beträgt und der Empfangsweg keinen oder im Wesentlichen keinen Einfluss auf den gemessenen Phasenunterschied hat.

Beim Amplituden-Monopulsverfahren wird üblicherweise nur das Amplitudenverhältnis zwischen Summen- und Differenzsignal ausgewertet. Bei Signalüberlagerung durch zwei sich überlappende Antworten oder Mehrwegeausbreitung wird das Verhältnis jedoch komplex-wertig. Um die Komplexität des Signals als Indikator für Signalverfälschungen verwenden zu können, kann es notwendig sein, auch bei Amplitudenmonopuls-Betrieb die Phase zwischen Summen- und Differenzsignal auf 0° abzugleichen. Andernfalls ist das Verhältnis von Summen- zu Differenzsignal immer komplex und Signalverfälschungen können möglicherweise nicht detektiert werden.

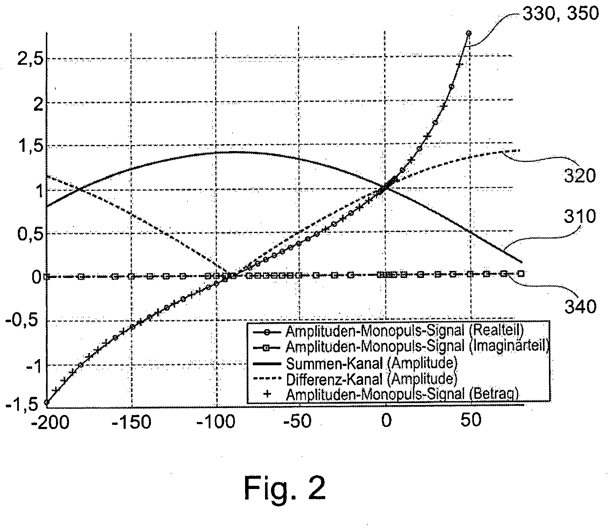

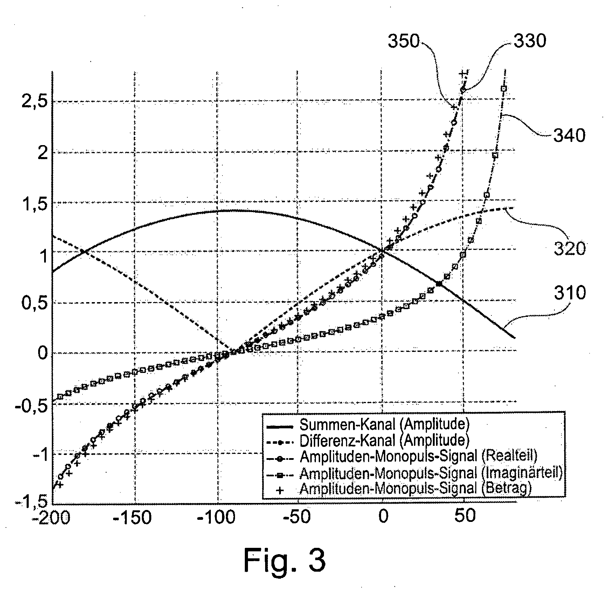

Fig. 2 und Fig. 3 zeigen eine Darstellung der komplexen Signale in einem Radarsystem, wobei jeweils das Summensignal 310 (Signal auf dem Summen-Kanal, z.B. auf dem ersten Kanal 100), das Differenzsignal 320 (Signal auf dem Differenz-Kanal, z.B. auf dem zweiten Kanal 200), der Realteil 330 des komplexen Amplitudenmonopulssignals, der Imaginärteil 340 des komplexen Amplitudenmonopulssignals und der Betrag 350 des komplexen Amplitudenmonopulssignals gezeigt werden.

Anhand dieser beiden Figuren können die Schritte des Verfahrens wie oben beschrieben veranschaulicht werden. Das Verfahren nutzt unter anderem die Tatsache aus, dass das Amplitudenmonopuls-Verfahren zur Bestimmung des Off-Boresight Azimuth unabhängig von der Phasendifferenz zwischen beiden Empfangskanälen ist, da nur der Betrag des Amplitudenmonopuls-Signals betrachtet wird. In einem Empfänger mit komplexer Signalverarbeitung lassen sich Real- und Imaginärteil des Signals jedoch getrennt betrachten, wie in den Figuren 2 und 3 gezeigt.

Fig. 2 zeigt den Fall ohne Phasenversatz zwischen Summen- und Differenzkanal. Der sog. Idealfall ist dadurch gekennzeichnet, dass der Phasenversatz zwischen Summen- und Differenzkanal 0° ist. In diesem Fall entspricht der Realteil 330 dem Betrag 350 des Amplitudenmonopuls-Signals, was ersichtlich ist, da beide Kurven zusammenfallen. Der Imaginärteil 340 ist null, unabhängig vom Off-Boresight Azimut des Ziels, die den Imaginärteil 340 anzeigende Linie fällt auf die Null-Linie.

Fig. 3 zeigt den Fall mit Phasenversatz zwischen Summen- und Differenzkanal. Der Betrag 350 des Amplitudenmonopuls-Signals ist unverändert im Vergleich zum Idealfall, welcher in Fig. 2 gezeigt ist. Jedoch entspricht der Realteil 330 nicht mehr dem Betrag 350, die entsprechenden Linien fallen (in diesem Fall: geringfügig) auseinander. Der Imaginärteil 340 ist ungleich null.

Im Folgenden beziehen sich Variablen mit der Kennzeichnung ' (z.B. d') auf den in Fig. 2 gezeigten Idealfall, wohingegen Variablen ohne diese Kennzeichnung (z.B. d) sich auf den in Fig. 3 gezeigten Fall beziehen.

Allgemein lässt sich das Amplituden-Monopulssignal $OBI'_{AM}$ wie folgt aus dem im Summenkanal 100 empfangen Signal s und dem im Differenzkanal 200 empfangenen Signal d bestimmen:

$$OBI'_{AM} = \left|\frac{d'}{s}\right| = \left|\frac{d}{s}\right| , d' = d \cdot e^{-j\varphi}$$

Dabei bezeichnet φ den Phasenversatz zwischen Summen- und Differenzkanal. Real- und Imaginärteil lauten:

$$\text{Re}(\mathit{OBI'}_{AM}) = \text{Re}(d'/s) = \cos\varphi \cdot \text{Re}(d/s)$$

$$\text{Im}(\mathit{OBI'}_{AM}) = \text{Im}(d'/s) = \sin\varphi \cdot \text{Im}(d/s)$$

Im Idealfall, also bei $\varphi = 0°$ Phasenversatz zwischen Summen- und Differenzkanal, vereinfacht sich das Amplituden-Monopulssignal $\mathit{OBI}_{AM}$ wie folgt:

$$\mathit{OBI}_{AM} = \left|\frac{d}{s}\right| = \mathit{OBI'}_{AM}$$

mit Real- und Imaginärteil:

$$\text{Re}(\mathit{OBI}_{AM}) = 1 \cdot \text{Re}(d/s) = \mathit{OBI}_{AM}$$

$$\text{Im}(\mathit{OBI}_{AM}) = 0 \cdot \text{Im}(d/s) = 0$$

Um aus einem an realen Zielen gemessenen komplexen Amplituden-Monopulssignal den Phasenversatz zwischen Summen- und Differenzkanal zu bestimmen, werden folgende Eigenschaften ausgenutzt: dass im Idealfall der Realteil dem Betrag des Amplituden-Monopulssignals entspricht sowie dass der Betrag unabhängig vom Phasenversatz zwischen Summen- und Differenzkanal ist.

Damit ergibt sich:

$$\text{Re}(\mathit{OBI'}_{AM}) = \cos\varphi \cdot \text{Re}(d/s) = \cos\varphi \cdot \mathit{OBI}_{AM} = \cos\varphi \cdot \mathit{OBI'}_{AM}$$

In einem System mit beliebigem Phasenversatz zwischen Summen- und Differenz-kanal können Realteil und Betrag des Amplituden-Monopulssignals aus dem empfangenen Summen- und Differenzsignal bestimmt werden. Daraus kann mit oben stehender Formel der Phasenversatz berechnet werden:

$$\rightarrow \varphi = \begin{cases} \text{acos}\left(\dfrac{\text{Re}(\mathit{OBI'}_{AM})}{\mathit{OBI'}_{AM}}\right) & \text{Re}(\mathit{OBI'}_{AM}) > 0 \\ \pi - \text{acos}\left(\dfrac{\text{Re}(\mathit{OBI'}_{AM})}{\mathit{OBI'}_{AM}}\right) & \text{sonst} \end{cases}$$

Alternativ kann der Phasenversatz mit den oben gegebenen Zusammenhängen zum Beispiel wie folgt bestimmt werden:

$$|\mathit{OBI'}_{AM}| = \sqrt{\text{Re}(\mathit{OBI'}_{AM})^2 + \text{Im}(\mathit{OBI'}_{AM})^2}$$

$$= \sqrt{\cos^2\varphi \cdot \text{Re}(\mathit{OBI}_{AM})^2 + \text{Im}(\mathit{OBI'}_{AM})^2}$$

$$= \sqrt{\cos^2\varphi \cdot |\mathit{OBI'}_{AM}|^2 + \text{Im}(\mathit{OBI'}_{AM})^2}$$

Nach Quadrieren und Umstellen ergibt sich:

$$\frac{|\mathit{OBI'}_{AM}|^2 - \text{Im}(\mathit{OBI'}_{AM})^2}{|\mathit{OBI'}_{AM}|^2} = \cos^2\varphi$$

und schließlich

$$\cos \varphi = \pm \sqrt{1 - \frac{\mathrm{Im}(OBI'_{AM})^2}{|OBI'_{AM}|^2}}$$

Die Wahl der verschiedenen Rechenwege kann sich vorteilhaft auf die Rechenzeit des Verfahrens auswirken, d.h. diese insbesondere verkürzen, so dass die Ablaufzeit des Verfahrens ebenfalls verkürzt werden kann.

In anderen Worten kann die Einstellung des Phasenversatzes in einer Ausführungsform wie folgt beschrieben werden:

1. Reale Ziele oder bekannten Test-Transponder (FFM) beobachten, d.h. wie im normalen operationellen Betrieb abfragen und Antworten im Summen- und Differenzkanal empfangen. In dieser Ausführungsform sind keine zusätzlichen Test- und Messgeräte notwendig.
2. Amplitudenmonopuls-Signal für zumindest eine, oder auch mehrere Antworten bestimmen. Für gute Ergebnisse kann es vorteilhaft sein, wenn nur Ziele mit hoher Empfangsamplitude und ohne Störungen ausgewertet werden.
3. Phasenversatz berechnen und Phasenschieber entsprechend einstellen. Danach kann der normale operationelle Betrieb mit Azimutbestimmung nach dem Phasenmonopuls-oder auch Amplitudenmonopuls-Verfahren aufgenommen werden.

Mit den oben gezeigten Berechnungen kann es in Abhängigkeit des tatsächlichen Phasenversatzes zwischen Summen- und Differenzkanal passieren, dass der Phasenunterschied nach Kompensation des Phasenversatzes nicht 0°, sondern 180° beträgt, und zwar als Ergebnis der Quadrier- und Wurzel-Operationen. Auch in diesem Fall ist normaler operationeller Betrieb mit Azimutbestimmung nach dem Phasenmonopuls-Verfahren ohne Einschränkung möglich.

**Bezugszeichenliste**

| | |
|---|---|
| 10 | Radarsystem |
| 20 | Signalverarbeitungseinheit |
| 100 | erster Kanal |
| 110 | Empfangseinheit |
| 111 | Antennenelement |
| 112 | Antennenelement |
| 113 | Antennenelement |
| 120 | Signalübertragungselemente |
| 200 | zweiter Kanal |
| 220 | Signalübertragungselemente |
| 230 | Phasenschiebereinheit |
| 310 | Summensignal, Signal auf dem Summen-Kanal |
| 320 | Differenzsignal, Signal auf dem Differenz-Kanal |
| 330 | Realteil des komplexen Amplitudenmonopulssignals |
| 340 | Imaginärteil des komplexen Amplitudenmonopulssignals |
| 350 | Betrag des komplexen Amplitudenmonopulssignals |

**Patentansprüche**

1. Verfahren zum Kalibrieren eines Radarsystems (10), welches eine Empfangseinheit (110) mit einer Mehrzahl von Antennenelementen (111, 112, 113) aufweist, wobei das Verfahren die folgenden Schritte aufweist:

Empfangen eines ersten komplexen Signals auf einem ersten Kanal (100) und Umsetzen des empfangenen ersten komplexen Signals in ein erstes komplexes Informationsübertragungssignal;
Empfangen eines zweiten komplexen Signals auf einem zweiten Kanal (200) und Umsetzen des empfangenen zweiten komplexen Signals in ein zweites komplexes Informationsübertragungssignal;

Ermitteln eines komplexen Amplitudenmonopulssignals als Verhältnis des ersten komplexen Informationsübertragungssignals und des zweiten komplexen Informationsübertragungssignals;

Ermitteln eines Phasenversatzes zwischen dem ersten komplexen Informationsübertragungssignal und dem zweiten komplexen Informationsübertragungssignal basierend auf einem Realteil und einem Imaginärteil des Verhältnisses des ersten komplexen Informationsübertragungssignals und des zweiten komplexen Informationsübertragungssignals;

Nutzen des ermittelten Phasenversatzes, um eine relative Phasenverschiebung zwischen dem ersten komplexen Informationsübertragungssignal des ersten Kanals und dem zweiten komplexen Informationsübertragungssignal des zweiten Kanals auszugleichen;

wobei das erste komplexe Signal als Summensignal zumindest zweier Antennenelemente (111, 112, 113) der Empfangseinheit (110) des Radarsystems gebildet wird;

und wobei das zweite komplexe Signal als Differenzsignal zumindest zweier Antennenelemente (111, 112, 113) der Empfangseinheit (110) des Radarsystems gebildet wird.

2. Verfahren nach dem vorhergehenden Anspruch, weiterhin aufweisend den Schritt: Zuführen des ermittelten Phasenversatzes an eine Phasenschiebereinheit (230), welche angeordnet ist, den ermittelten Phasenversatz dem ersten komplexen Informationsübertragungssignal zuzuführen.

3. Verfahren nach einem der vorhergehenden Ansprüche, weiterhin aufweisend den Schritt:

Einspeisen eines bekannten Signalmusters in die erste Empfangseinheit (110) und in die zweite Empfangseinheit (210), wobei dieses bekannte Signalmuster als erstes komplexes Signal bzw. als zweites komplexes Signal genutzt wird.

4. Verfahren nach einem der vorhergehenden Ansprüche,
wobei der Phasenversatz zwischen dem ersten komplexen Informationsübertragungssignal und dem zweiten komplexen Informationsübertragungssignal zwischen der Empfangseinheit (110) und einer Signalverarbeitungseinheit (20) ermittelt wird;
wobei die Signalverarbeitungseinheit (20) ausgeführt ist, eine Umfeldabbildung basierend auf dem ersten komplexen Informationsübertragungssignal und dem zweiten komplexen Informationsübertragungssignal zu erzeugen.

5. Verfahren nach Anspruch 4,
wobei der Phasenversatz zwischen dem ersten komplexen Informationsübertragungssignal und dem zweiten komplexen Informationsübertragungssignal unmittelbar an einer Eingangsschnittstelle der Signalverarbeitungseinheit (20) ermittelt wird.

6. Verfahren nach Anspruch 4 oder 5,
wobei der Phasenversatz durch die Signalverarbeitungseinheit (20) ermittelt wird.

7. Radarsystem (10), welches vorgesehen ist, das Verfahren nach einem der vorhergehenden Ansprüche auszuführen.

8. Radarsystem (10) nach Anspruch 7,
wobei es sich bei dem Radarsystem um ein Sekundärradarsystem handelt.

9. Radarsystem nach Anspruch 7 oder 8,
wobei das Radarsystem ausgeführt ist, ein Phasenmonopulsverfahren auszuführen.

10. Radarsystem nach Anspruch 7 oder 8,
wobei das Radarsystem ausgeführt ist, ein Amplitudenmonopulsverfahren auszuführen.

**Claims**

1. Method for calibrating a radar system (10) that has a reception unit (110) having a plurality of antenna elements (111, 112, 113), wherein the method has the following steps:

receiving a first complex signal on a first channel (100) and converting the received first complex signal into a first complex information transmission signal;

receiving a second complex signal on a second channel (200) and converting the received second complex signal into a second complex information transmission signal;

ascertaining a complex amplitude monopulse signal as the ratio of the first complex information transmission signal and the second complex information transmission signal;

ascertaining a phase offset between the first complex information transmission signal and the second complex information transmission signal based on a real part and an imaginary part of the ratio of the first complex information transmission signal and the second complex information transmission signal;

using the ascertained phase offset in order to equalize a relative phase shift between the first complex information transmission signal of the first channel and the second complex information transmission signal of the second channel;

wherein the first complex signal is formed as a summed signal for at least two antenna elements (111, 112, 113) of the reception unit (110) of the radar system;

and wherein the second complex signal is formed as a difference signal for at least two antenna elements (111, 112, 113) of the reception unit (110) of the radar system.

2. Method according to the preceding claim, additionally having the step of:

supplying the ascertained phase offset to a phase shifter unit (230) that is arranged to supply the ascertained phase offset to the first complex information transmission signal.

3. Method according to either of the preceding claims, additionally having the step of:

feeding a known signal pattern into the first reception unit (110) and into the second reception unit (210), this known signal pattern being used as first complex signal and as second complex signal, respectively.

4. Method according to one of the preceding claims,
wherein the phase offset between the first complex information transmission signal and the second complex information transmission signal is ascertained between the reception unit (110) and a signal processing unit (20);
the signal processing unit (20) being designed to generate a map of the surroundings based on the first complex information transmission signal and the second complex information transmission signal.

5. Method according to Claim 4,
wherein the phase offset between the first complex information transmission signal and the second complex information transmission signal is ascertained directly at an input interface of the signal processing unit (20).

6. Method according to Claim 4 or 5,
wherein the phase offset is ascertained by the signal processing unit (20).

7. Radar system (10) that is provided to carry out the method according to one of the preceding claims.

8. Radar system (10) according to Claim 7,
wherein the radar system is a secondary radar system.

9. Radar system according to Claim 7 or 8,
wherein the radar system is designed to carry out a phase monopulse method.

10. Radar system according to Claim 7 or 8,
wherein the radar system is designed to carry out an amplitude monopulse method.

**Revendications**

1. Procédé d'étalonnage d'un système radar (10), lequel possède une unité de réception (110) comprenant une pluralité d'éléments d'antenne (111, 112, 113), le procédé comprenant les étapes suivantes :

réception d'un premier signal complexe sur un premier canal (100) et conversion du premier signal complexe reçu en un premier signal de transmission d'informations complexe ;
réception d'un deuxième signal complexe sur un deuxième canal (200) et conversion du deuxième signal complexe reçu en un deuxième signal de transmission d'informations complexe ;

détermination d'un signal mono-impulsion d'amplitude complexe en tant que rapport entre le premier signal de transmission d'informations complexe et le deuxième signal de transmission d'informations complexe ;

détermination d'un déphasage entre le premier signal de transmission d'informations complexe et le deuxième signal de transmission d'informations complexe en se basant sur une partie réelle et une partie imaginaire du rapport entre le premier signal de transmission d'informations complexe et le deuxième signal de transmission d'informations complexe ;

utilisation du déphasage déterminé afin de compenser un décalage de phase relatif entre le premier signal de transmission d'informations complexe du premier canal et le deuxième signal de transmission d'informations complexe du deuxième canal ;

le premier signal complexe étant formé en tant que signal somme d'au moins deux éléments d'antenne (111, 112, 113) de l'unité de réception (110) du système radar ;

et le deuxième signal complexe étant formé en tant que signal différentiel d'au moins deux éléments d'antenne (111, 112, 113) de l'unité de réception (110) du système radar.

2. Procédé selon la revendication précédente, comprenant en outre l'étape d'acheminement du déphasage déterminé à une unité de déphaseur (230) qui est disposée de manière à acheminer le déphasage déterminé au premier signal de transmission d'informations complexe.

3. Procédé selon l'une des revendications précédentes, comprenant en outre l'étape d'injection d'un modèle de signal connu dans la première unité de réception (110) et dans la deuxième unité de réception (210), ce modèle de signal connu étant utilisé en tant que premier signal complet ou en tant que deuxième signal complexe.

4. Procédé selon l'une des revendications précédentes, le déphasage entre le premier signal de transmission d'informations complexe et le deuxième signal de transmission d'informations complexe étant déterminé entre l'unité de réception (110) et une unité de traitement de signaux (20);

l'unité de traitement de signaux (20) étant conçue pour générer une représentation de l'environnement en se basant sur le premier signal de transmission d'informations complexe et le deuxième signal de transmission d'informations complexe.

5. Procédé selon la revendication 4, le déphasage entre le premier signal de transmission d'informations complexe et le deuxième signal de transmission d'informations complexe étant déterminé directement au niveau d'une interface d'entrée de l'unité de traitement de signaux (20).

6. Procédé selon la revendication 4 ou 5, le déphasage étant déterminé par l'unité de traitement de signaux (20).

7. Système radar (10) qui est conçu pour mettre en oeuvre le procédé selon l'une des revendications précédentes.

8. Système radar (10) selon la revendication 7, le système radar étant un système radar secondaire.

9. Système radar selon la revendication 7 ou 8, le système radar étant conçu pour exécuter un procédé mono-impulsion de phase.

10. Système radar selon la revendication 7 ou 8, le système radar étant conçu pour exécuter un procédé mono-impulsion d'amplitude.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1365247 A